# EUROPÄISCHE PATENTANMELDUNG

(11) **EP 1 235 440 A2**
(43) Veröffentlichungstag der Anmeldung: **28.08.2002**
(21) Anmeldenummer: 02090023.9
(22) Anmeldetag: 18.01.2002
(51) Int. Cl.: H04Q 3/00

(54) **Verfahren zur Bereitstellung von IN-Diensten in einem Netzwerk**

(30) Priorität: 27.02.2001 DE 10110353
(71) Anmelder: SIEMENS AKTIENGESELLSCHAFT, 80333 München (DE)
(72) Erfinder: Gabrysch, Mathias, 80469 M-nchen (DE)

(57) **Zusammenfassung**

Die vorliegende Erfindung betrifft ein Verfahren zur Bereitstellung von IN-Diensten in einem Netzwerk, die eine oder mehrere Netzwerkressourcen benutzen und mittels geeigneter aktivierter Trigger in dem Netzwerk ausgelöst werden können, wobei die Aktivierung der Trigger über eine offene Netzwerkschnittstelle erfolgt. Ferner betrifft die Erfindung ein Netzwerksystem mit einem Intelligenten Netz und mindestens einer offenen Netzwerkschnittstelle, über die Trigger des Intelligenten Netzes, die vom Intelligenten Netz bereitstellbare Dienste auslösen können, aktivierbar sind.

## Beschreibung

Bei dem Konzept des Intelligenten Netzes (IN) werden bestimmte Leistungen eines Netzes, die über den reinen Übermittlungsdienst und deren ergänzende Dienstmerkmale hinausgehen, in Intelligenten Netzknoten konzentriert. Insbesondere Dienste, die netzweit Umsetzung und Überprüfung benötigen, müssen so nicht je Netzknoten realisiert werden, sondern können zentral über das Gesamtnetz erbracht werden.
Neue Dienste können auf diese Weise einfach und schnell im gesamten Netz eingeführt und genutzt werden. Voraussetzung für die Bereitstellung eines Intelligenten Netzes ist ein sehr leistungsfähiger Informationsaustausch zwischen den Netzknoten und einer großen, zentralen Datenbank mit globalen Netzinformationen, auf die von jedem Punkt des Netzes schnell zugegriffen werden kann. Die Dienste werden durch bestimmte Dienstkennzahlen oder bestimmte Ereignisse aktiviert. Die Dienstkennzahlen adressieren dabei keine Vermittlungsstelle oder Endeinrichtung am Netz, sondern sie aktivieren die Diensterbringer (Server) im Netz, d. h., die Kennzahl ruft einen bestimmten Dienst auf. Die dann eventuell folgende Rufnummer wird einem extern am Netz angeschalteten IN-Rechner übergeben, der sie entsprechend dem aufgerufenen Dienst auswertet. Erst danach werden die Einstellinformationen an das Netz gegeben und die beiden Kommunikationspartner miteinander verbunden. Die Informationen zur Ermittlung des aktuellen Dienstziels werden im IN-Rechner in Datenbanken pro Dienst und Dienstkunde gespeichert.

In heutigen Telekommunikationsnetzen ist der Netzwerkoperator im Namen des Netzbetreibers für die Administration der Betriebe verantwortlich. Nur der Netzwerkoperator hat Kontrolle über Netzwerkressourcen und die damit verbundenen Funktionalitäten. IN-basierte Mehrwertdienste benötigen im allgemeinen Zugriff und Kontrolle auf Netzwerkelemente und Netzwerkfunktionen und werden aus diesem Grund nur von Netzwerkoperatoren selbst direkt angeboten.

Privatpersonen und kleinere Unternehmen müssen i.a. zur Internet-Nutzung einen Vertrag mit einem sogenannten Internet-Service-Provider (ISP) haben, der Ihnen einen Zugang und eine Internet-Adresse einrichtet.
Die Teilnehmer müssen für ihre Internet-Kommunikation erst den Internet-Zugang ihres Internet-Service-Providers (ISP) am nächsten Point of Presence (POP) kontaktieren, um beispielsweise ihre E-Mails einsehen zu können oder neue zu verfassen. Die Verbindung zum Betreiber erfolgt dabei meist mit einem Modem oder einem ISDN-Anschluss.

Die Zahl von privaten Internet-Benutzern, die sich über das Telefonnetz ins Internet einwählen, wächst ständig. Die Mehrzahl der privaten Server benutzt dabei nach wie vor ein analoges Modem und belegt während der Online-Session meist den einzigen Sprachkanal. Dies hat zur Folge, dass der Anschluss während der Internet-Session besetzt ist und keine Sprachanrufe zum Teilnehmer durchgestellt werden können. Dies bringt mehrere Nachteile mit sich. Zum einen kommt es zu Einnahmeverlusten bei den Netzwerkoperatoren, da Telefonate während einer Online-Session nicht durchgestellt werden können. Ferner ist es für die Anrufenden unerfreulich, da sie immer das Besetztzeichen hören und mit dem Angerufenen während einer Online-Session nicht in Kontakt treten können und dieser noch nicht einmal von ihrem Anruf weiß. Des weiteren ist es für den Internet-Server bzw. den Angerufenen unangenehm zu wissen, dass er während seiner Online-Session seinen meist einzigen Sprachkanal blockiert und insofern nicht mehr telefonisch erreichbar ist.

Aufgabe der vorliegenden Erfindung war es nun, ein einfaches Verfahren bereitzustellen, mit dem es einem Nichtnetzwerkoperator, beispielsweise einem Internet-Service-Provider (ISP) möglich ist, selbst Intelligente Dienste (IN-Dienste) anzubieten, die bestimmte Netzwerkressourcen und Funktionalitäten des Fest- oder Mobilfunknetzes benutzen.

Gelöst wird diese Aufgabe durch das erfindungsgemäße Verfahren gemäß Anspruch 1. Weitere vorteilhafte Ausführungsformen des erfindungsgemäßen Verfahren sind in den entsprechenden Unteransprüchen wiedergegeben.

Gemäß Anspruch 1 ist erfindungsgemäß ein Verfahren zur Bereitstellung von IN-Diensten in einem Netzwerk vorgesehen, die eine oder mehrere Netzwerkressourcen benutzen und mittels geeigneter aktivierter Trigger in dem Netzwerk ausgelöst werden können, wobei die Aktivierung der Trigger über eine offene Netzwerkschnittstelle erfolgt.

Eine IN-Hardware besteht i. a. aus Vermittlungsstellen des Fernsprechnetzes, sogenannten Service Switching Points (SSP), die den eigentlichen Aufruf eines IN-Dienstes erkennen und zu einem entsprechenden Service Control Point (SCP) leiten. Der Dienst selbst läuft in dem SCP, einem sehr leistungsfähigen Rechner mit einer großen, komplexen Datenbank, der viele Anfragen in kurzer Zeit bearbeiten kann. Der SSP ist eine digitale Vermittlungsstelle mit speziellen Steuerungsprogrammen.

Der Aufruf eines IN-Dienstes ist in der Steuerung der Vermittlungsstelle an einen entsprechend vordefinierten Trigger gekoppelt.

Durch die IN-Elemente wird im wesentlichen die Steuerung der Verbindungen beeinflusst. Aufgrund der Steuerungen durch das IN-System werden die Nutzkanäle innerhalb des Telekommunikationsnetzes geschaltet.
Bei Eintritt eines entsprechenden Ereignisses werden TriggerPunkte, sogenannte Detection Points, passiert, die eine Aktion auslösen können.
An diesen Trigger-Punkten können die IN-Dienste ansetzen. Hier kann die Signalisierung zum SCP geleitet oder eine Verbindung überwacht bzw. gesteuert werden. Durch die SCP-Steuerung wiederum kann ein bestimmter Detection Point "scharfgemacht" werden. Mittels des erfindungsgemäßen Verfahrens kann nun ein derartiger Trigger über eine offene Netzwerkschnittstelle aktiviert werden. Das bedeutet, dass nun auch ein Nichtnetzwerkbetreiber über diese offene Netzwerkschnittstelle einen Trigger-Punkt, bzw. einen sogenannten Detection Point "scharfmachen" kann.

Vorzugsweise handelt es sich bei der offenen Netzwerkschnittstelle um ein durch die Parlay-Gruppe definiertes API (Application Programming Interface), im folgenden als Parlay API bezeichnet, oder um ein OSA API. Während das Parlay API vorwiegend im Festnetzbereich Einsatz findet, wird das OSA API vorzugsweise im Mobilfunknetz verwendet. Mit der Einführung von offenen Netzwerkschnittstellen, wie beispielsweise dem Parlay API oder dem OSA API, wird es auch Nichtnetzwerkbenutzern möglich sein, Intelligente Dienste anzubieten, die bestimmte Netzwerkressourcen und Funktionalitäten des Fest- oder Mobilfunknetzes benutzen.

Hierbei können beispielsweise über die offene Netzwerkschnittstelle bestimmte Trigger, sogenannte TriggerDetektionPoints (TDP) im Festnetz-SSP aktiviert werden.

In einer bevorzugten Ausführungsform des erfindungsgemäßen Verfahrens wird ein Internet-Call-Waiting-Dienst (ICW) bereitgestellt. Mit Hilfe des erfindungsgemäßen Verfahrens ist es beispielsweise für Internet-Service-Provider möglich, ihren Kunden zusätzlich zum Internet-Zugangsdienst den Internet-Call-Waiting-Dienst (ICW) anzubieten, so dass Server während der Online-Session im Falle eines Anrufs in Echtzeit entscheiden können, ob sie den Anruf annehmen, ablehnen oder umleiten möchten. Der Hauptvorteil für den Kunden ist es dabei, auch während der Online-Session telefonisch erreichbar zu sein. Ein großer Vorteil für den Internet-Service-Provider (ISP) entsteht dadurch, dass er durch das Anbieten eines ICW-Dienstes einen Wettbewerbsvorteil gegenüber anderen Internet-Service-Providern bekommt. Dies ist besonders in Zeiten erhöhten Konkurrenzdruckes sehr wichtig, da man sich dadurch von seinen Mitbewerbern differenzieren kann. Ferner sind mit dem erfindungsgemäßen Verfahren auch Vorteile für den Netzwerkoperator verbunden. Einerseits erhält er erhöhte Einnahmen durch Benutzungsentgelte der offenen Netzwerkschnittstelle, beispielsweise des Parlay APIs oder des OSA APIs. Ferner hat er keine bzw. wenige Verluste durch nicht durchgestellte Telefonate. Darüber hinaus sind die Benutzer des Telefonnetzes zufriedener, da sie nicht mehr so häufig auf besetzte Leitungen stoßen.

Eine weitere Aufgabe der vorliegenden Erfindung war es, ein Netzwerksystem bereitzustellen, das ermöglicht, dass ein Nichtnetzwerkoperator, wie beispielsweise ein Internet-Service-Provider IN-Dienste selbst unmittelbar seinen Kunden anbieten kann.

Gelöst wird diese Aufgabe durch ein Netzwerksystem mit einem Intelligenten Netz und mindestens einer offenen Netzwerkschnittstelle, über die geeignete Trigger des Intelligenten Netzes, die vom Intelligenten Netz bereitstellbare Dienste auslösen können, aktivierbar sind.

Vorzugsweise handelt es sich bei der offenen Netzwerkschnittstelle um ein Parlay API oder ein OSA API.

In einer besonders bevorzugten Ausführungsform des erfindungsgemäßen Netzwerkes ist über die offene Netzwerkschnittstelle ein Internet-Call-Waiting-Dienst aktivierbar. Vorzugsweise können die vom Intelligenten Netz bereitstellbaren Dienste von einem Internet-Service-Provider aktiviert werden. Bei der Serviceaktivierung des Parlay basierten ICW-Services hat der Server den ICW-Service bei seinem Internet-Service-Provider subskribiert, d. h. der Server hat bei seinem Internet-Service-Provider hinterlegt, dass er den ICW-Service in Anspruch nehmen möchte. Der Server bzw. der Benutzer wählt sich wie üblich bei seinem Internet-Service-Provider von zu Hause aus ein. In dem Benutzerprofil, das bei dem Internet-Service-Provider liegt, ist neben benutzerspezifischen Daten, wie beispielsweise Name des Benutzers, Passwort des Benutzers und Adresse des Benutzers auch ein Eintrag über die Subskription des ICW-Services vorhanden. Dies führt dazu, dass die Applikation, d. h. der ICW-Service, auf einem Rechner, im folgenden als Client bezeichnet, gestartet wird. Der Client, der bei dem Internet-Service-Provider lokalisiert ist, aktiviert über die offene Netzwerkschnittstelle, d. h. vorzugsweise über ein Parlay API oder ein OSA API, auf einem entsprechenden Gateway, das bei dem Netzwerkoperator lokalisiert ist, die entsprechenden Trigger im Telekommunikationsnetz. Jetzt ist ein Zustand erreicht, in dem im Falle eines weiteren Anrufes an den Benutzer bzw. den Server der ICW-Service in Anspruch genommen wird.
Versucht nun ein weiterer Teilnehmer des Netzes den Server bzw. den Internetbenutzer während seiner Online-Session anzurufen, so wird eine Anfrage beim Gateway gestartet, wie mit dem Anrufversuch zu verfahren ist, da der Trigger in dem für den Internet-Server zuständigen Dienste-Vermittlungspunkt im Netz, d. h. der Service-Switching-Point (SSP) aktiviert ist. Das Gateway benachrichtigt den Client des Internet-Service-Providers über das Eintreten dieses Ereignisses. Nun wird die eigentliche Internet-Call-Waiting-Applikation (ICW) auf dem Client gestartet. Am Ende des Programms wird eine bestimmte auswählbare Aktion eingeleitet. Der Client informiert über das Parlay API oder das OSA API das Gateway über die durchzuführende Aktion. Das Gateway wiederum weist den SSP an, die Aktion durchzuführen. Es können dabei unterschiedlich auswählbare Aktionen angeboten werden. Beispielsweise könnte die Internet-Session des Internet-Service-Benutzers beendet werden und der Anruf durchgestellt werden. Ferner könnte für den Anrufer eine Ansage angelegt werden. Des weiteren könnte der Anrufer zu einer anderen Rufnummer weiter verbunden werden, sei es eine Rufnummer im Fest- oder im Mobilnetz. Denkbar ist es auch, dass der Anruf an ein "Voice over IP Media Gateway" weitergeleitet wird. Das Voice over IP Media Gateway würde es ermöglichen, dass der Surfer beispielsweise über ein Kopfhörer-Mikrofon-Set, das an seinem Computer angeschlossen ist, mit dem Anrufer telefonieren kann, ohne die "online-Session" zu unterbrechen. Dies könnte beim Internet-Service-Provider lokalisiert sein.

Welche der genannten Aktionen eingeleitet wird, kann der Service-Benutzer selbst in seinem Serviceprofil bequem über ein Web-basiertes GUI (Graphical User Interface)festlegen. Beispielsweise kann eingestellt werden, dass in Abhängigkeit der Tageszeit und der CLI, dem Anrufer eine vorkonfigurierte Ansage angespielt wird.

Vorzugsweise trifft der Server bzw. der Benutzer selbst interaktiv die Entscheidung, was geschehen soll. Dazu hat der Server bei Einwahl zum Internet-Service-Provider automatisch ein Programm im Hintergrund gestartet, das nun von der ICW-Applikation über die IP-Verbindung aktiviert wird. Bei dem Server bzw. Benutzer befindet sich ein Fenster, dass dem Server mitteilt, dass jemand versucht ihn anzurufen. Der Server kann nun interaktiv einer der wählbaren Aktionen anklicken. Daraufhin wird die Antwort wieder über die aktive IP-Verbindung der ICW-Applikation übermittelt, die dann über das Parlay API oder dem OSA API auf dem Gateway die Anweisung umsetzt.

## Patentansprüche

1. Verfahren zur Bereitstellung von IN-Diensten in einem Netzwerk, die eine oder mehrere Netzwerkressourcen benutzen und mittels geeigneter aktivierter Trigger in dem Netzwerk ausgelöst werden können, wobei die Aktivierung der Trigger über eine offene Netzwerkschnittstelle erfolgt.

2. Verfahren nach Anspruch 1,
**dadurch gekennzeichnet,**
**dass** die offene Netzwerkschnittstelle ein Parlay API oder ein OSA API ist.

3. Verfahren nach Anspruch 1 oder 2,
**dadurch gekennzeichnet,**
**dass** ein Internet-Call-Waiting-Dienst (ICW) bereitgestellt wird.

4. Netzwerksystem mit einem Intelligenten Netz und mindestens einer offenen Netzwerkschnittstelle, über die geeignete Trigger des Intelligenten Netzes, die vom Intelligenten Netz bereitstellbare Dienste auslösen können, aktivierbar sind.

5. Netzwerksystem nach Anspruch 4,
**dadurch gekennzeichnet,**
**dass** die offene Netzwerkschnittstelle ein Parlay API oder ein OSA API ist.

6. Netzwerksystem nach Anspruch 4 oder 5,
**dadurch gekennzeichnet,**
**dass** über die offene Netzwerkschnittstelle ein Trigger im Intelligenten Netz aktivierbar ist, der einen Internet-Call-Waiting-Dienst (ICW) auslöst.

7. Netzwerksystem nach einem der Ansprüche 4 bis 6,
**dadurch gekennzeichnet,**
**dass** die geeigneten Trigger des Intelligenten Netzes, die vom Intelligenten Netz bereitstellbare Dienste auslösen können, über die offene Netzwerkschnittstelle durch eine Steuereinheit eines Internet-Service-Provider aktivierbar sind.
